# EUROPEAN PATENT APPLICATION

(11) **EP 1 331 257 A1**
(43) Date of publication of application: **30.07.2003**
(21) Application number: 01974868.0
(22) Date of filing: 16.10.2001
(51) Int. Cl.: C09D 175/04, C09D 5/02, C09D 127/12, C09D 151/00

(54) **WATER-BASED FLUOROCOPOLYMER COATING COMPOSITION**

(30) Priority: 20.10.2000 JP 2000320775
(71) Applicant: Daikin Industries, Ltd., Osaka-shi, Osaka 530-8323 (JP)
(72) Inventor: IMOTO, Katsuhiko, c/o Yodogawa-seisakusho, Settsu-shi, Osaka 566-8585 (JP); WADA, Susumu, c/o Yodogawa-seisakusho, Settsu-shi, Osaka 566-8585 (JP); MITSUHATA, Nobuo, c/o Yodogawa-seisakusho, Settsu-shi, Osaka 566-8585 (JP); FUWA, Tsunehiko, c/o Yodogawa-seisakusho, Settsu-shi, Osaka 566-8585 (JP); MOHRI, Haruhiko, c/o Yodogawa-seisakusho, Settsu-shi, Osaka 566-8585 (JP)
(74) Representative: Goddar, Heinz J., Dr.
(86) International application number: JP0109059
(87) International publication number: WO02034849

(57) **Abstract**

The present invention can provide the aqueous coating composition of fluorine-containing copolymer being excellent in long-term weather resistance and useful for the interior and exterior of buildings and the aqueous dispersion composition of fluorine-containing copolymer which is used for the aqueous coating composition. The aqueous coating composition of fluorine-containing copolymer is prepared by dispersing in water the aqueous dispersion of fluorine-containing copolymer having hydroxyl and the water dispersible polyisocyanate compound.

## Description

### TECHNICAL FIELD

The present invention relates to an aqueous coating composition of fluorine-containing copolymer which is excellent in long-term weather resistance and is useful for the interior and exterior of buildings and relates to an aqueous dispersion composition of fluorine-containing copolymer used therefor.

### BACKGROUND ART

There have been proposed, as an aqueous paint, a crosslinking system of an aqueous dispersion of acrylic resin having hydroxyl or an aqueous dispersion of fluoroolefin (particularly perhaloolefin represented by chlorotrifluoroethylene)/vinyl ether copolymer and a polyisocyanate dispersible in water (JP7-324180A), but neither the aqueous dispersion of acrylic resin nor the aqueous dispersion of fluoroolefin/vinyl ether copolymer fully satisfies the long-term weather resistance.

An object of the present invention is to provide an aqueous coating composition possessing enhanced long-term weather resistance.

Particularly an object of the present invention is to obtain an aqueous coating composition which contains a fluorine-containing copolymer dispersion comprising a fluorine-containing copolymer having hydroxyl, particularly a vinylidene polymer having hydroxyl and a polyisocyanate compound dispersible in water.

### DISCLOSURE OF INVENTION

Namely, the present invention relates to an aqueous coating composition of fluorine-containing copolymer which is prepared by dispersing in water an aqueous dispersion of fluorine-containing copolymer having hydroxyl and a polyisocyanate compound dispersible in water.

A proportion of the aqueous dispersion of fluorine-containing copolymer having hydroxyl to the polyisocyanate compound dispersible in water is preferably from 0.1 to 2.0 in the ratio of NCO/OH (mole ratio) from the viewpoint of excellent weather resistance, film forming property and water resistance.

It is preferable from the viewpoint of enhancement of weather resistance that the aqueous dispersion of fluorine-containing copolymer is obtained by emulsion polymerization, so-called seed polymerization of from 10 to 400 parts by weight of a monomer mixture containing an alkyl acrylate having an alkyl group of C1 to C18 and/or an alkyl methacrylate having an alkyl group of C1 to C18 and an ethylenically unsaturated monomer copolymerizable with those esters in an aqueous medium in the presence of 100 parts by weight of fluorine-containing polymer particles to give copolymer particles having an average particle size of from 0.05 to 3 µm, and in the monomer mixture, a monomer having hydroxyl is contained in an amount of from 0.1 to 50 % by weight based on the monomer mixture.

It is preferable that the above-mentioned fluorine-containing copolymer is a vinylidene fluoride (VdF) copolymer from the viewpoint of excellent weather resistance, adhesion and compatibility with the acrylic or methacrylic copolymer.

Also it is preferable that in the above-mentioned seed polymerization, the seed particles of the fluorine-containing polymer are particles of a VdF copolymer obtained by polymerizing a monomer mixture containing from 50 to 100 % by mole of VdF, from the viewpoint of excellent compatibility with the acrylic or methacrylic copolymer.

Further it is preferable that in the seed polymerization, the above-mentioned monomer having hydroxyl contains an alkylene chain which is directly connected to hydroxyl and has not less than 3 carbon atoms, from the viewpoint of excellent compatibility with the fluorine-containing polymer.

More preferred aqueous dispersion of fluorine-containing copolymer having hydroxyl is a fluorine-containing copolymer dispersion obtained by seed-polymerizing from 25 to 150 parts by weight of a monomer mixture containing an alkyl acrylate and/or an alkyl methacrylate and an ethylenically unsaturated monomer having hydroxyl in an aqueous dispersion containing fluorine-containing polymer particles in the presence of 100 parts by weight of the fluorine-containing polymer particles.

A preferred polyisocyanate compound dispersible in water which is an another component is a compound having self-emulsifying property from the viewpoint of excellent self-emulsifying property, storage stability, curability, film forming property and gloss of a coating film.

It is particularly preferable from the viewpoint of excellent self-emulsifying property, storage stability, curability, film forming property and gloss of a coating film that the polyisocyanate compound contains polyoxyethylene chain, possesses self-emulsifying property and further is a polyisocyanate compound of a reaction product of polyisocyanate and a nonionic emulsifying agent which has active hydrogen atom reactive with isocyanate group and contains ethylene oxide units in an average amount of from 5 to 70 in one molecule.

It is preferable from the viewpoint of excellent self-emulsifying property and hydrophilic property that the above-mentioned nonionic emulsifying agent is a polyoxyalkylene monool.

Further the present invention relates to an aqueous coating composition of vinylidene fluoride copolymer in which an aqueous dispersion of particles of vinylidene fluoride copolymer having hydroxyl and obtained by seed-polymerizing an acrylic monomer in the presence of particles of vinylidene fluoride copolymer as seed particles and a polyisocyanate compound dispersible in water are dispersed in water and the vinylidene fluoride copolymer of the seed particles contains from 55 to 98 % by mole of vinylidene fluoride unit.

Examples of the vinylidene fluoride copolymer of the seed particles are, for instance, copolymers comprising vinylidene fluoride and at least one selected from the group consisting of chlorotrifluoroethylene, tetrafluoroethylene and hexafluoropropylene.

It is preferable that the particles of the vinylidene fluoride copolymer having hydroxyl in the aqueous dispersion of vinylidene fluoride copolymer are vinylidene fluoride copolymer particles obtained by emulsion-polymerizing from 10 to 400 parts by weight of a monomer mixture containing an alkyl acrylate having an alkyl group of C1 to C18 and/or an alkyl methacrylate having an alkyl group of C1 to C18 and a hydroxyl-containing ethylenically unsaturated monomer copolymerizable with those esters in an aqueous medium in the presence of 100 parts by weight of vinylidene fluoride copolymer particles, in which the hydroxyl-containing ethylenic monomer is contained in the monomer mixture in an amount of from 0.1 to 50 % by weight and the obtained hydroxyl-containing vinylidene fluoride copolymer particles have an average particle size of from 0.05 to 3 µm.

Further examples of the polyisocyanate compound are compounds containing polyoxyethylene chain.

### BEST MODE FOR CARRYING OUT THE INVENTION

The aqueous coating composition of the present invention comprises (A) the aqueous dispersion of fluorine-containing copolymer having hydroxyl and (B) the polyisocyanate compound dispersible in water.

First, the aqueous dispersion (A) of fluorine-containing copolymer having hydroxyl is explained below.

Example of the fluorine-containing copolymer having hydroxyl is (A1) a modified polymer which comprises a fluoroolefin as an essential component and is obtained by copolymerizing the fluoroolefin with an organic acid having hydroxyl or (A2) a fluorine-containing seed polymer obtained by seed-polymerizing a monomer having hydroxyl and an ethylenically unsaturated group in the presence of particles of a fluoroolefin polymer.

In any of the above-mentioned polymers (A1) and (A2), preferably used as the fluoroolefin (i) are one or more fluoroolefins having from about 2 to about 4 carbon atoms, for example, vinyl fluoride, vinylidene fluoride (VdF), tetrafluoroethylene (TFE), chlorotrifluoroethylene (CTFE), hexafluoropropylene (HFP), trifluoroethylene and the like.

Examples of the combination of the fluoroolefins (i) are, for instance, VdF, TFE and CTFE homopolymes, VdF/TFE copolymer, VdF/HFP copolymer, VdF/CTFE copolymer, VdF/TFE/CTFE copolymer, VdF/TFE/HFP copolymer, TFE/HFP copolymer and the like.

Other examples of the fluoroolefin polymer are, for instance, polymers comprising a fluoroolefin and a non-fluorine-containing monomer (ii).

Examples of the above-mentioned non-fluorine-containing monomer (ii) copolymerizable with the fluoroolefin are, for instance, α-olefins such as ethylene, propylene and isobutylene; vinyl ethers such as ethyl vinyl ether (EVE), cyclohexyl vinyl ether (CHVE), hydroxybutyl vinyl ether (HBVE), butyl vinyl ether, isobutyl vinyl ether, methyl vinyl ether and polyoxyethylene vinyl ether; alkenyls such as polyoxyethylene allyl ether, ethyl allyl ether, hydroxyethyl allyl ether, allyl alcohol and allyl ether; vinyl esters such as vinyl acetate, vinyl lactate, vinyl butyrate, vinyl pyvarate, vinyl benzoate, VEOVA9 and VEOVA10 (trade name of Shell Chemical); and the like. Particularly α-olefins, vinyl ethers, vinyl esters and alkenyls are preferably used.

Examples of the copolymer are TFE/propylene copolymer, TFE/ethylene copolymer, TFE/vinyl ester copolymer, TFE/vinyl ether copolymer, HFP/vinyl ether copolymer, HFP/vinyl ester copolymer and the like.

In the copolymer comprising a fluoroolefin and a non-fluorine-containing monomer, it is preferable that the fluoroolefin monomer unit is contained in an amount of from 20 to 80 % by mole. If the amount of the fluoroolefin monomer unit is less than 20 % by mole, weather resistance is not exhibited sufficiently. If the amount exceeds 80 % by mole, when a paint is prepared using the copolymer and is formed into a coating film, there is a tendency that an appearance of the coating film is lowered.

For introducing a hydroxyl-containing unit, there are a method of copolymerizing a hydroxyl-containing monomer (copolymerization method), a method of forming a unit containing hydroxyl by a high molecular reaction of a polymer (high molecular reaction method) and the like method.

Examples of the hydroxyl-containing monomer which can be used for the copolymerization method are, for instance, hydroxyalkyl vinyl ether such as hydroxylbutyl vinyl ether; hydroxyalkyl allyl ether such as hydroxylethyl allyl ether; hydroxyalkyl esters of acrylic acid or methacrylic acid such as hydroxyethyl acrylate and hydroxyethyl methacrylate; vinyl esters of hydroxycarboxylic acid; allyl esters of hydroxycarboxylic acid; and the like.

Example of the high molecular reaction method is, for instance, a method of copolymerizing a hydrolyzable vinyl ester and then hydrolyzing to convert to hydroxyl.

The hydroxyl-containing monomer (iii) introduces, to the polymer, a crosslinking point for crosslinking with a crosslinking agent comprising a polyisocyanate compound mentioned infra and after the crosslinking, provides a coating film which is excellent in long-term water resistance and has a practically sufficient hardness by drying at normal temperature.

The amount of hydroxyl in the modified polymer (A1) is from 0.1 to 10 % by weight, preferably from 0.5 to 5.0 % by weight. If the amount is too small, crosslinking points are decreased and a sufficient hardness cannot be obtained. If the amount is too large, a viscosity becomes too high and there occur a problem with handling such as coatability and a problem that a bending resistance of a coating film is poor and the coating film is easily broken.

The aqueous dispersion of particles of the modified fluoroolefin polymer (A1) is prepared by usual emulsion polymerization. Namely, the aqueous dispersion can be obtained by emulsion polymerization of the above-mentioned fluoroolefin monomer or monomer mixture in the presence of an emulsifying agent of not more than 5 % by weight, preferably not more than 1 % by weight based on water.

Water used therefor is preferably deionized water. Also the emulsifying agent is preferably a fluorine-containing surfactant. Further a reactive fluorine-containing emulsifying agent can also be used. Also a non-fluorine-containing nonionic emulsifying agent can be used together in a trace amount.

The fluorine-containing emulsifying agent is at least one of compounds containing fluorine atom in its structure and having a surface activating ability or a mixture of two or more thereof. Examples thereof are, for instance, acids represented by X(CF₂)ₙCOOH, in which n is an integer of from 6 to 20, X is F or H, or metal salts, ammonium salts, amine salts or quaternary ammonium salts thereof; acids represented by Y(CH₂CF₂)ₘCOOH, in which m is an integer of from 6 to 13, Y is F or Cl, or metal salts, ammonium salts, amine salts or quaternary ammonium salts thereof; and the like. Also a reactive emulsifying agent described in JP8-67795A may be used solely or in a combination of the above-mentioned fluorine-containing emulsifying agent. Further a non-fluorine-containing nonionic emulsifying agent described in JP7-90153A can be used together.

The fluorine content of the modified fluorine-containing polymer (A1) is not less than 10 % by weight, preferably not less than 30 % by weight. If the fluorine content is decreased, weather resistance is not exhibited sufficiently.

The aqueous dispersion of the fluorine-containing seed polymer (A2) which is another embodiment of the aqueous dispersion of fluorine-containing copolymer in the present invention can be prepared by seed-polymerizing a monomer mixture comprising (iv) an alkyl acrylate having an alkyl group of C1 to C18 and/or an alkyl methacrylate having an alkyl group of C1 to C18 and (v) a hydroxyl-containing ethylenically unsaturated monomer copolymerizable with those esters in an aqueous medium in the presence of seed particles of a fluorine-containing polymer (a2).

The fluorine-containing polymer (a) of the seed particles which can be used preferably is a fluorine-containing polymer obtained by copolymerizing one or more of the above-mentioned fluoroolefins (i) or a fluorine-containing copolymer obtained by copolymerizing the fluoroolefin (i) with the non-fluorine-containing monomer (ii). Preferred kinds and combination of the monomers are the same as mentioned above. Particularly preferred are VdF polymers and further VdF polymers containing from 50 to 100 % by mole, preferably from 55 to 98 % by mole of VdF.

The hydroxyl-containing monomer (iii) introduces, to the seed polymer, a crosslinking point for crosslinking with a crosslinking agent comprising the polyisocyanate compound mentioned infra like the above-mentioned fluorine-containing copolymer (A1) having hydroxyl and after the crosslinking, provides a coating film which is excellent in initial water resistance and has a practically sufficient hardness by drying at normal temperature.

Examples of the (meth)acrylate (iv) in the monomer mixture for the seed polymerization are an alkyl acrylate having an alkyl group of C1 to C18 and/or an alkyl methacrylate having an alkyl group of C1 to C18.

Examples of the alkyl acrylate having an alkyl group of C 1 to C18 are, for instance, methyl acrylate, ethyl acrylate, propyl acrylate, n-butyl acrylate, isobutyl acrylate, 2-ethylhexyl acrylate, lauryl acrylate and the like.

Examples of the alkyl methacrylate having an alkyl group of C1 to C18 are, for instance, methyl methacrylate, ethyl methacrylate, propyl methacrylate, n-propyl methacrylate, isobutyl methacrylate, cyclohexyl methacrylate, lauryl methacrylate and the like.

Examples of the preferred hydroxyl-containing ethylenically unsaturated monomer (v) are, for instance, hydroxyalkyl esters of α,β-unsaturated carboxylic acid such as acrylic acid, methacrylic acid; itaconic acid, succinic acid, succinic anhydride, fumaric acid, fumaric anhydride, crotonic acid, maleic acid and maleic anhydride; hydroxyalkyl vinyl ethers such as hydroxybutyl vinyl ether (HBVE), 2-hydroxyethyl vinyl ether and 6-hydroxyhexyl vinyl ether; allyl ethers such as 2-hydroxyethoxy ally ether and 4-hydroxybutoxy allyl ether; and the like. Among them, preferred are hydroxyalkyl esters of acrylic acid and methacrylic acid from the viewpoint of copolymerization reactivity. Concretely there are hydroxypropyl acrylate, hydroxypropyl methacrylate, 2-hydroxypropyl acrylate, 2-hydroxypropyl methacrylate, hydroxybutyl acrylate, hydroxybutyl methacrylate, 2-hydroxybutyl acrylate, 2-hydroxybutyl methacrylate, 4-hydroxybutyl acrylate, 4-hydroxybutyl methacrylate, hydroxyhexyl acrylate, hydroxyhexyl methacrylate and the like which have an alkyl group of C3 to C18, preferably C3 to C6.

It is preferable that the hydroxyl-containing ethylenically unsaturated monomer (v) is contained in the monomer mixture for the seed polymerization in an amount of from 0.1 to 50 % by weight, more preferably from 1 to 45 % by weight. If the content of the monomer (v) unit is smaller, an effect of improving initial water resistance of an obtained coating film is lowered and a hardness thereof cannot be increased to a sufficiently practical level. If the content is larger, a viscosity of the aqueous dispersion is increased significantly and there occurs a problem with handling, for example, lowering of practicability of an obtained coating.

The monomer mixture for the seed polymerization may contain a non-fluorine-containing monomer (vi) other than the monomers (iv) and (v).

Examples of the other non-fluorine-containing monomer (vi) for the seed polymerization are, for instance, α,β-unsaturated carboxylic acids such as acrylic acid and methacrylic acid; α-olefins such as ethylene, propylene and isobutylene; vinyl ethers such as ethyl vinyl ether (EVE), cyclohexyl vinyl ether (CHVE), butyl vinyl ether, isobutyl vinyl ether, methyl vinyl ether and polyoxyethylene vinyl ether; alkenyls such as polyoxyethylene allyl ether, ethyl allyl ether, allyl alcohol and allyl ether; vinyl esters such as vinyl acetate, vinyl lactate, vinyl butyrate, vinyl pyvarate, vinyl benzoate, VEOVA9 and VEOVA10 (trade name of Shell Chemical); aromatic vinyl compounds such as styrene, α-methyl styrene and p-tert-butyl styrene; acrylonitrile and the like.

Also for enhancement of solvent resistance and water resistance, polyfunctional monomers such as ethylene glycol dimethacrylate and propylene glycol dimethacrylate can be used.

The fluorine content in the seed polymer (A2) is not less than 10 % by weight, preferably not less than 30 % by weight. If the fluorine content is decreased, weather resistance is not exhibited sufficiently. It is preferable that the fluoroolefin monomer unit is contained in the seed polymer (A2) in an amount of from 20 to 90 % by mole based on the whole seed polymer. If the amount of the fluoroolefin monomer unit is less than 20 % by mole, weather resistance is not exhibited sufficiently, and if the amount exceeds 90 % by mole, when a coating film is formed, an appearance thereof tends to be lowered.

The seed polymerization can be carried out by emulsion polymerization of from 10 to 400 parts by weight, preferably from 25 to 150 parts by weight of the above-mentioned monomer mixture for the seed polymerization in an aqueous medium in the presence of 100 parts by weight of seed particles of the fluorine-containing polymer (a). The seed polymerization can be carried out under the same conditions as in usual emulsion polymerization. For example, a surfactant, polymerization initiator, chain transfer agent and as case demands, a chelating agent, pH control agent and a solvent are added to the aqueous medium containing the seed particles of the fluorine-containing polymer (a), and a reaction is carried out at a temperature of from about 20°C to about 90°C for about 0.5 hour to about 6 hours.

When the monomer for the seed polymerization is emulsion-polymerized in the presence of the fluorine-containing polymer seed particles, it can be considered that firstly, swelling of the monomer in the fluorine-containing polymer seed particles arises and at that time, the aqueous dispersion of the fluorine-containing polymer particles dissolved uniformly in the monomer is obtained and then by the addition of an initiator, the monomer is polymerized to form compatibilized particles in which the molecular chains are entangled.

With respect to the surfactant, an anionic surfactant, a nonionic surfactant, a combination of an anionic surfactant and a nonionic surfactant and as case demands, an ampholytic surfactant can be used.

Examples of the anionic surfactant are fatty alcohol sulfate, sodium alkylsulfonate, sodium alkylbenzenesulfonate, sodium dialkyl sulfosuccinate, sodium alkyldiphenyl ether disulfonate and the like. Examples of the nonionic surfactant are polyoxyethylene alkyl ethers, polyoxyethylene alkyl phenyl ethers, polyoxyethylene alkyl esters, polyoxyethylene alkyl phenyl esters, sorbitan alkyl esters, glyceryl esters, derivatives thereof and the like.

Examples of the ampholytic surfactant are lauryl betaine and the like. Also a so-called reactive emulsifying agent copolymerizable with the ethylenically unsaturated monomer can also be used.

Examples of the reactive emulsifying agent available on the market are Blemmer PE-350, Blemmer PME-400 and Blemmer 70PEP350B (available from NOF Corporation), NK ESTER M-40G, NK ESTER M-90G and NK ESTER M-230G (available from Shin-Nakamura Chemical Co., Ltd.), RMA450M (available from Nippon Nyukazai Kabushiki Kaisha), Aquaron HS10, Aquaron HS20, Aquaron HS1025, Aquaron RN10, Aquaron RN20, Aquaron RN30, Aquaron RN50 and Aquaron RN2025 (available from Dai-Ichi Kogyo Seiyaku Kabushiki Kaisha), NK ESTER AMP-60G, NK ESTER CB-1, NK ESTER SA, NK ESTER A-SA, ELEMINOL JS2 and ELEMINOL RS30 (available from Sanyo Kasei Kogyo Kabushiki Kaisha), LATEMUL WX (available from Kao Corporation) and the like.

The amount of the surfactant is usually from about 0.05 part by weight to about 5.0 parts by weight based on 100 parts by weight of the monomers (iv), (v) and (vi).

A polymerization initiator is not limited particularly as far as it generates a radical usable for free radical reaction in an aqueous medium at a temperature of from 20° to 90°C. The initiator can be used in a combination of a reducing agent as case demands. Examples of water soluble initiator are, for instance, persulfate, hydrogen peroxide, 2,2-azobis(2-amidinopropane) hydrochloride (AIBA) and the like; and examples of the reducing agent are sodium pyrosulfite, sodium hydrogensulfite, sodium L-ascorbate and the like. Examples of oil soluble initiator are diisopropyl peroxy dicarbonate (IPP), benzoyl peroxide, dibutyl peroxide, azobisisobutyronitrile (AIBN) and the like. The amount of the initiator is usually from about 0.05 part by weight to about 2.0 parts by weight based on 100 parts by weight of the non-fluorine-containing unsaturated monomers (iv) and (v). The polymerization temperature is preferably from 20° to 90°C.

As the chain transfer agent, there are used halogenated hydrocarbons (for example, chloroform, carbon tetrachloride and the like), mercaptans (for example, n-lauryl mercaptan, t-lauryl mercaptan and n-octyl mercaptan) and the like. The amount of the chain transfer agent is usually from 0 to about 5.0 parts by weight based on 100 parts by weight of the non-fluorine-containing unsaturated monomer.

A small amount of methyl ethyl ketone, acetone, trichlorotrifluoroethane, methyl isobutyl ketone, cyclohexanone, ethyl acetate or the like may be used as a solvent in a range not lowering workability, safety against disasters, environmental safety and safety in production. There is a case where swelling of the monomer in the fluorine-containing polymer particles for the seed polymerization is improved by adding the solvent.

The seed polymerization can be carried out by known methods, for example, a method of introducing batchwise the whole monomers in a reaction system in the presence of the seed particles of the fluorine-containing polymer (a), a method of introducing a part of the monomers and after reaction, introducing the residual monomers continuously or dividedly and a method of continuously introducing the whole monomers.

An average particle size of the obtained seed-polymerized fluorine-containing copolymer particles is from 0.05 to 3 µm, preferably from 0.06 to 2.5 µm.

A particle size of the seed particles of the fluorine-containing polymer (a) for the seed polymerization in the aqueous dispersion is not more than 2.5 µm in order to adjust the particle size after the seed polymerization in a range of from 0.05 to 3 µm, and it is preferable that the concentration of the seed particles is in a range of from 30 to 70 % by weight, preferably from 35 to 60 % by weight. If the particle size after the seed polymerization exceeds 3 µm, sedimentation stability of the aqueous dispersion is lowered, and even if the resin has the same components, there is a case where a minimum film forming temperature of the aqueous dispersion composition is increased.

The aqueous coating composition of the present invention is prepared by blending the polyisocyanate compound as a crosslinking agent to the above-mentioned aqueous dispersion of fluorine-containing copolymer having hydroxyl. As the polyisocyanate compound, those described in JP7-324180A can be used.

Namely, there are polyisocyanate compounds mechanically dispersible in water or self-emulsifying polyisocyanate compounds. The self-emulsifying polyisocyanate compounds are compounds which can be emulsified and dispersed in water without using an emulsifying agent.

Examples of the polyisocyanate compounds mechanically dispersible in water are aliphatic polyisocyanates such as hexamethylene diisocyanate; aromatic polyisocyanates such as m- or p-phenylene diisocyanate, 2,4- or 2,6-tolylene diisocyanate, diphenylmethane-4,4'-diisocyanate, naphthalene-1,5-diisocyanate and 4,4'-diisocyanate-3,3'-dimethyldiphenyl; alicyclic polyisocyanates such as bis-(isocyanatecyclohexyl)methane and isophorone diisocyanate; crude polyisocyanates such as crude tolylene diisocyanate and crude diphenylmethane diisocyanate; and modified polyisocyanates such as carbodiimide-modified diphenylmethane diisocyanate, polyol-modified diphenylmethane diisocyanate and polyol-modified hexamethylene diisocyanate.

Those polyisocyanates may be dimers or trimers of biuret type, isocyanurate ring type and uretdion type or blocked polyisocyanates obtained by reacting an isocyanate group with a blocking agent. Examples of the blocking agent are alcohols, phenols, caprolactams, oximes, activated methylene compounds and the like. Those polyisocyanates may be used in a mixture of two or more thereof.

Those polyisocyanates are used in a state of being mechanically dispersed in water, and by adding an emulsifying agent at the time of dispersing, a stable dispersion can be obtained. Examples of the preferable polyisocyanates mechanically dispersed in water are those having a relatively low viscosity. The emulsifying agent is not limited particularly and known emulsifying agents are used. Ionic emulsifying agents, particularly those having activated hydrogen atoms are not preferred since they react at the time of dispersing to thicken the dispersion and also a dispersibility thereof is lowered. Preferred is a nonionic emulsifying agent, particularly polyethylene glycol monomethyl ether alcohol having ethylene oxide units.

Usually blocked polyisocyanates are not cured unless the temperature thereof becomes not less than 140°C. Therefore when curing at a temperature lower than that, it is preferable to use polyisocyanates which is not blocked.

Examples of the self-emulsifying polyisocyanate compound are prepolymers obtained by reacting the above-mentioned polyisocyanates with hydrophilic polyoxyalkylenes. Examples of the preferred hydrophilic polyoxyalkylenes are those having at least one group reactive with isocyanate and having a molecular weight of from 200 to 4,000. Particularly preferred are polyoxyalkylene polyol and polyoxyalkylene monool which have a molecular weight of from 300 to 1,500. If the molecular weight is low, self-emulsifying property is not exhibited sufficiently, and if the molecular weight is high, self-emulsifying property is good, but stability in water is lowered and also crystallinity is increased, thereby lowering storage stability at low temperature and causing turbidity. It is preferable from the viewpoint of hydrophilic property that the whole or many of the oxyalkylene chains of polyoxyalkylenes are oxyethylene units.

This reaction of the polyisocyanates with the polyoxyalkyleneglycols can be carried out at a temperature of not more than 100°C in the presence of a catalyst such as tertiary amines, alkyl-substituted ethyleneimines, tertiary alkyl phosphines, metal alkylacetonates and metal salts of organic acids and as case demands, in the presence of a co-catalyst. In this reaction, it is preferable that an amount of remaining isocyanate groups is so adjusted as to become from 10 to 24 % by weight.

If the amount of remaining isocyanate groups is small, it is not preferred because there is a case where the reactivity with the fluorine-containing copolymer is lowered and also because a large amount of isocyanate compound is needed to obtain sufficient degree of crosslinking, which has an adverse effect on weather resistance of a coating film. If the amount of remaining isocyanate groups is too large, it is not preferred because a stable emulsion is hardly formed. The self-emulsifying isocyanate compounds are described in JP4-15270B, etc.

Example of the particularly preferred polyisocyanate compound having self-emulsifying property is a polyisocyanate compound of a reaction product of polyisocyanate and a nonionic emulsifying agent which has an active hydrogen atom reactive with isocyanate group and contains ethylene oxide units in an average amount of from 5 to 70 in one molecule. It is preferable that the nonionic emulsifying agent is a polyoxyalkylene monool since self-emulsifying property and hydrophilic property are excellent.

Also the aqueous coating composition of the present invention can be prepared by mixing the above-mentioned aqueous dispersion (A) of fluorine-containing copolymer having hydroxyl and the polyisocyanate compound (B).

As the mixing method, there are a method of adding the polyisocyanate compound to the aqueous dispersion of fluorine-containing copolymer and then stirring and a method of mechanically dispersing the polyisocyanate compound in water and then mixing the dispersion with the aqueous dispersion of fluorine-containing copolymer. In either of the methods, preferably the polyisocyanate compound is dissolved in a proper organic solvent (methyl ethyl ketone, butyl carbitol acetate or the like) and then mixed with the aqueous dispersion of fluorine-containing copolymer or dispersed in water because the dispersing procedure is easy and the particle size of the polyisocyanate compound becomes small. The amount of the organic solvent is from 1 to 20 % by weight, preferably from 1 to 10 % by weight based on the amount of the polyisocyanate compound.

Though the proportion of the fluorine-containing copolymer having hydroxyl to the polyisocyanate compound is not limited particularly, it is preferable that the NCO/OH ratio (mole ratio) thereof is in a range of from 0.1 to 2.0, particularly from 0.5 to 1.5. If the NCO/OH ratio (mole ratio) is too high, it is not preferred because there is a case where the isocyanate group remains in the coating film and reacts with water to generate air bubbles, which causes a film defect. If the NCO/OH ratio (mole ratio) is too low, it is not preferred because a crosslinking effect is not exhibited sufficiently.

The crosslinkable composition of the present invention may be crosslinked and cured by firstly forming a coating film by proper means and then curing the coating film by drying usually at a temperature of from 0° to 200°C, preferably from 5° to 100°C for 30 seconds to one week.

The aqueous coating composition of the present invention can be used as a coating agent for protecting surfaces of inorganic substrates such as concrete, slate and ALC plate and metallic substrates and as a coating agent for a coated paper by adding additives which are used generally for aqueous emulsion paints, such as a pigment, thickener, dispersing agent, defoaming agent, antifreezing agent, film forming auxiliary, ultraviolet light absorbent and antioxidant. Also the aqueous coating composition can be used as a decorative coating agent by mixing synthetic resin beads, natural stones or the like for flat finish and further can be used as an aqueous coating for the exterior and/or interior of low- or medium-storied buildings.

In the present invention, when the aqueous coating composition is used for a paint, the blend proportion thereof varies depending on the form of the paint, coating method, etc. and the solid content may be from about 5 % by weight to about 95 % by weight, usually from 20 to 90 % by weight based on the paint.

For such an aqueous paint, known coating methods can be used and for the coating, there can be used known coating devices and machines such as a brush, roller, roll coater, air sprayer, air-less sprayer, electrostatic coating machine, dip coating machine and electrocoating machine.

The above-mentioned aqueous paint can be applied to various substrates, i.e. inorganic materials such as glass, cement and concrete in addition to metals such as iron, aluminum, copper and alloys thereof, resins such as FRP, acrylic resin, vinyl chloride resin, polycarbonate resin and polyurethane resin, wood, fiber, etc. The substrates may be subjected to pre-treatment and surface treatment as case demands by coating known primers such as aqueous resin emulsion paints and solvent based coatings. The coating composition of the present invention can be coated after properly carrying out undercoating or pre-coating. There may be employed any coating systems such as a clear coating on surfaces of various known decorative substrates which have unevenness or a color pattern or an enamel coating. After the coating, the coating film is cured by drying usually at a temperature of from 5° to 300°C for 30 seconds to one week. A thickness of the coating film is not limited particularly and is usually from 1 to 200 µm, preferably from 5 to 100 µm, more preferably from about 10 µm to about 50 µm.

The thus obtained coated article can be used for wide applications because stain-proofing property, stain removability, adhesion, weather resistance and chemical resistance are excellent and a surface of the coating film has a gloss, lubricity and hardness. Namely, the coated article can be used for wide applications such as the interior and exterior of electric appliances (electronic range, toaster, refrigerator, washing machine, hair dryer, television set, video deck, amplifier, radio, electric pot, rice cooker, cassette deck with a radio, cassette deck, compact disc player, video camera, etc.); the interior and exterior of an air conditioner, i.e. indoor unit, outdoor unit, air blow-off port and duct, air cleaner, heater, etc.; illumination appliances, i.e. fluorescent lamp, chandelier and reflection panel; furniture, machine parts, decorative parts, comb, frame for glasses, natural fiber, synthetic fiber (fiber in the form of a string and a fabric obtained therefrom), the interior and exterior of office apparatuses (phone, facsimile machine, copying machine (including a roll), camera, overhead projector, epidiascope, clock, slide projector, desk, bookshelf, locker, document rack, chair, book ends, electronic white board, etc.); automobiles (wheel, door mirror, metal braid, door knob, number plate, steering wheel, instrument panel, etc.); kitchen appliances (range hood, sink, kitchen table, cooking knife, chopping board, water tap, gas range, ventilation fan, etc.); interior decoration of partition panel, bath unit, shutter, blind, curtain rail, accordion curtain, wall, ceiling, floor, etc.; the exterior of a house such as outside wall, handrail, door and shutter; the exterior of buildings; exterior materials for buildings such as ceramic siding material, foamed concrete panel, concrete panel, aluminum curtain wall, steel panel, zinc-plated steel sheet, stainless steel sheet, vinyl chloride sheet, etc.; window glass, etc.

The crosslinkable aqueous dispersion composition of fluorine-containing resin of the present invention is then explained by means of examples and preparation examples, but is not limited to them.

### PREPARATION EXAMPLE 1

A 1-liter pressure resistant reactor with a stirrer was charged with 500 ml of deionized water and 0.5 g of ammonium perfluorooctanoate, and after repeating introduction of pressurized nitrogen gas and deaeration and then removing dissolved oxygen, the inside pressure of the reactor was increased to 0.79 MPa (8 kgf/cm²) at 60°C with a monomer mixture of VdF/TFE/CTFE having a % by mole ratio of 74/14/12. Then 20 g of a 1 % aqueous solution of ammonium persulfate and 1.5 g of ethyl acetate were introduced to initiate polymerization. To maintain the pressure inside the reactor constant at 0.79 MPa, the monomer mixture of VdF/TFE/CTFE having a % by mole ratio of 74/14/12 was continuously supplied and the reaction was continued. The reaction was carried out while adding 5 g of a 1 % aqueous solution of ammonium persulfate every 12 hours. Forty-five hours after starting of the polymerization, the inside temperature and pressure of the reactor were decreased to normal temperature and pressure and the polymerization was terminated. Thus an aqueous dispersion of particles of the fluorine-containing polymer (A) (solid content: 40 % by weight) was obtained. The average particle size of the particles in the aqueous dispersion which was measured with a laser beam scattering particle size meter (DLS-3000 available from Otsuka Denshi Kabushiki Kaisha) was 0.12 µm.

### PREPARATION EXAMPLES 2 to 5

Aqueous dispersions of VdF copolymer were prepared in the same manner as in Preparation Example 1 except that the monomer mixtures comprising the components shown in Table 1 were used.

In Table 1, the abbreviations represent the following monomers.
- VdF:: Vinylidene fluoride
- TFE:: Tetrafluoroethylene
- CTFE:: Chlorotrifluoroethylene
- HFP:: Hexafluoropropylene
- CHVE:: Cyclohexyl vinyl ether
- EVE:: Ethyl vinyl ether
- HEVE:: Hydroxyethyl vinyl ether

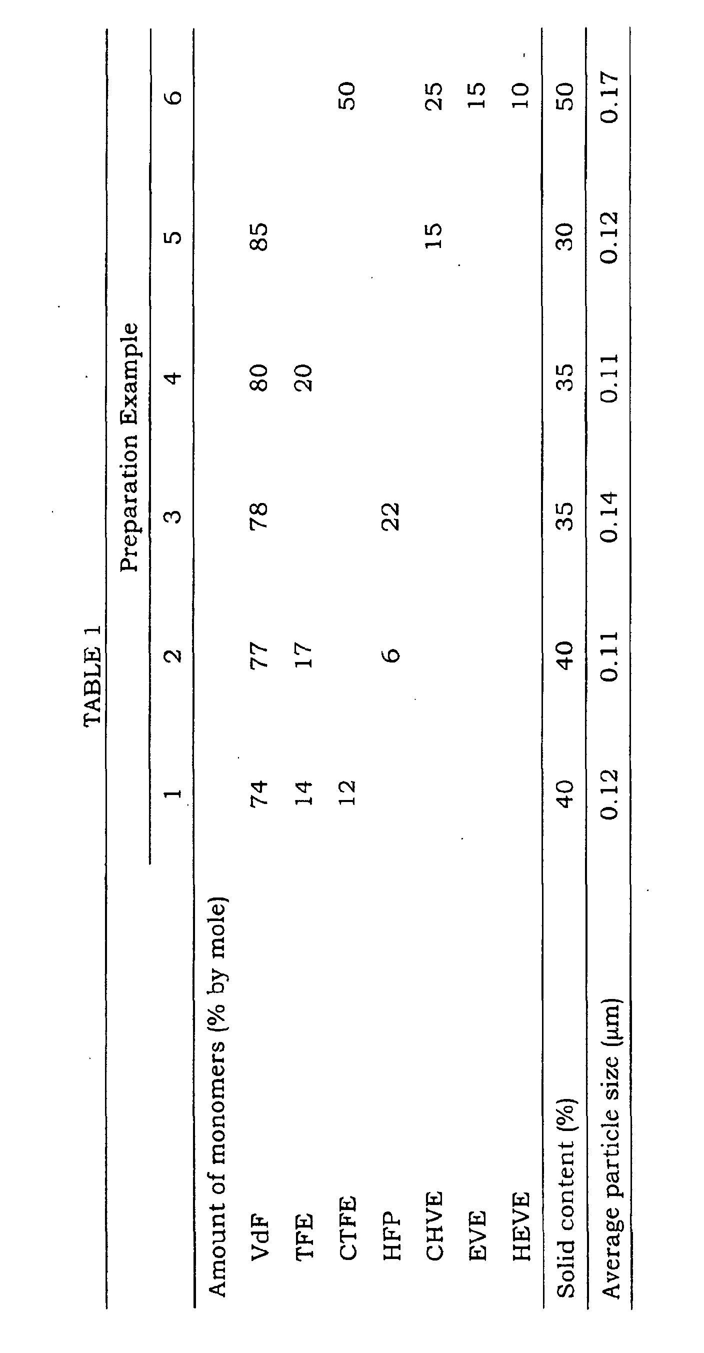

### PREPARATION EXAMPLE 6

A stainless steel autoclave equipped with a stirrer was charged with 48.2 parts by weight of ethyl vinyl ether (EVE), 140.5 parts by weight of cyclohexyl vinyl ether (CHVE), 51.7 parts by weight of hydroxyethyl vinyl ether (HEVE), 2.1 parts by weight of a monomer having a hydrophilic portion (EOVE), 100 parts by weight of deionized water, 9 parts by weight of an emulsifying agent (N-1110 available from Nippon Nyukazai Kabushiki Kaisha), 0.9 part by weight of an emulsifying agent (SLS available from Nikko Chemical Kabushiki Kaisha), 1.8 parts by weight of potassium carbonate (K₂CO₃) and 16.7 parts by weight of a 3 % aqueous solution of ammonium persulfate (APS) and then was cooled with ice. An increase in the inside pressure to 0.35 MPa (3.5 kgf/cm²) with nitrogen gas and deaeration were carried out. After the increase in the inside pressure and deaeration were repeated two times, the inside pressure was reduced to 10 mmHg, dissolved oxygen was removed and 259.6 parts by weight of chlorotrifluoroethylene was introduced. The reaction was carried out at 30°C for 12 hours and a milky aqueous dispersion of a CTFE polymer was obtained. EOVE is a compound represented by CH₂=CHOCH₂CH₂CH₂CH₂O(CH₂CH₂O)ₙH.

### PREPARATION EXAMPLE 7

A 2-liter four-necked flask equipped with a stirrer, thermometer, reflux tube and nitrogen gas feeding tube was charged with 309 parts by weight of deionized water and 1.0 part by weight of sodium dodecylbenzenesulfonate, and after replacing the inside of the flask with nitrogen gas, the mixture was maintained at 85°C with stirring. A pre-emulsion was separately prepared using 326.5 parts by weight of deionized water, 12.2 parts by weight of sodium dodecylbenzenesulfonate, 318.5 parts by weight of methyl methacrylate, 266.5 parts by weight of n-butyl acrylate, 65.0 parts by weight of hydroxypropyl methacrylate, 6.5 parts by weight of acrylic acid and 1.3 parts by weight of ammonium persulfate. Then 21 parts of the obtained pre-emulsion and 0.65 part by weight of ammonium persulfate were added to the mixture in the flask and 20 minutes after completion of the addition, the remaining pre-emulsion was added dropwise over four hours.

After the addition, the flask was maintained at 85°C for two hours and then was cooled to terminate the reaction. Then the pH value of the emulsion was adjusted to 8.5 with aqueous ammonia and an emulsion of hydroxyl-containing acrylic copolymer having an average particle size of 120 nm was obtained.

### EXAMPLE 1

A 2-liter four-necked flask equipped with a stirrer, thermometer, reflux tube and nitrogen gas feeding tube was charged with 700 parts by weight of the aqueous dispersion of VdF copolymer obtained in Preparation Example 1, 5.7 parts by weight of an aqueous solution of sodium alkylsulfosuccinate (RHEODOL OT-P available from KAO CORPORATION, content of non-volatile component: 70 %), 56.3 parts by weight of methyl methacrylate (MMA), 48.2 parts by weight of n-butyl acrylate (BA), 3.6 parts by weight of acrylic acid (AAc) and 12.0 parts by weight of hydroxypropyl methacrylate (HPMA), and the temperature thereof was increased to 80°C. Thereto was added 12 parts by weight of a 3 % aqueous solution of ammonium persulfate, and after the polymerization was carried out at a temperature of 80° to 85°C for four hours, the flask was cooled to terminate the reaction. Then the pH value of the obtained solution was adjusted to 8.5 with aqueous ammonia to obtain an aqueous dispersion of a fluorine-containing copolymer having hydroxyl.

Then the following white paint was prepared using the obtained aqueous dispersion of fluorine-containing copolymer having hydroxyl and the pigment paste mentioned below.

### (Preparation of pigment paste)

To 10.35 parts by weight of water were added 5.25 parts by weight of DISPERSANT 5027 available from SAN NOPCO LIMITED, 4.00 parts by weight of ethylene glycol, 70 parts by weight of CR-97 available from Ishihara Sangyo Kaisha, Ltd. as a pigment (titanium oxide), 0.30 part by weight of FS ANTIFOAM 013B available from Dow Corning Co., Ltd. as a defoaming agent and 10 parts by weight of a 2 % aqueous solution of Tylose H4000P available from Clariant Polymer K.K. Then the mixture was mixed and dispersed with a sand mill to obtain a pigment paste.

### (Preparation of white paint)

To 100 parts by weight of the respective aqueous dispersions prepared in Examples 1 to 7 and Comparative Examples 1 to 3 were added 35.29 parts by weight of the pigment paste prepared above, 2.00 parts by weight of Bayhydur (trade mark) 3100 (hexamethylene diisocyanate derivative having a self-emulsifying ability) available from Sumitomo Bayer Urethane Kabushiki Kaisha as a water dispersible polyisocyanate compound, 2.8 parts by weight of a 10 % aqueous solution of ADEKANOL UH-420 (available from ASAHI DENKA CO., LTD.) as a viscosity control agent, 5.0 parts by weight of TEXANOL as a film forming auxiliary and 0.1 part by weight of FS ANTIFOAM 013B as a defoaming agent, followed by sufficiently mixing with a dispersing stirrer to obtain a white paint.

The following tests were carried out using the obtained white paint. The results are shown in Table 2.

### (Solvent resistance test)

The above-mentioned white paint is coated on a glass plate and dried at room temperature for 14 days to make a test plate. The surface of the coating film is rubbed with a non-woven fabric impregnated with methyl ethyl ketone (MEK). The rubbing is continued until 100 rubbing cycles are completed. After completion of the so-prescribed test, when neither dissolving nor lowering of a gloss is recognized on the coating film, it is evaluated as ○ and when dissolving or lowering of a gloss is recognized on the coating film, it is evaluated as ×.

### (Boiling water resistance test)

A coated plate made in the same manner as in the above-mentioned solvent resistance test is dipped in 100°C boiling water for one hour and after the one-hour dipping, a gloss retention ratio (gloss after the dipping/gloss before the dipping: %) is obtained for evaluation of the boiling water resistance.

### (Weather resistance test)

An acrylic emulsion (Mowinyl DM-772 available from Clariant Polymer K.K.) is coated on an aluminum substrate according to JIS K5600-7-8, and after drying, the above-mentioned white paint is coated and dried at room temperature for 14 days to obtain a test piece. The test piece is subjected to accelerated weather resistance test for 1,000 hours in a SUPER UV TESTER (available from Iwasaki Electric Co., Ltd.) and a gloss retention ratio (gloss after the test/gloss before the test: %) is obtained for evaluation of the weather resistance.

### EXAMPLES 2 to 7 and COMPARATIVE EXAMPLE 1

Seed polymerization was carried out in the same manner as in Example 1 using the aqueous dispersions of fluorine-containing copolymer of Preparation Examples 1 to 5 and monomer mixtures which are shown in Table 2 to prepare aqueous dispersions of fluorine-containing copolymer having hydroxyl of Examples 2 to 7.

White paints were prepared in the same manner as in Example 1 using the obtained aqueous dispersions, and the same tests as in Example 1 were carried out. The results are shown in Table 2.

The polyisocyanate compound used in Examples 4 and 6 is Bayhydur TPLS2150/1 (isophorone diisocyanate derivative) available from Sumitomo Bayer Urethane Kabushiki Kaisha.

### COMPARATIVE EXAMPLES 2 to 3

White paints were prepared in the same manner as in Example 1 except that the aqueous dispersion of CTFE polymer and the acrylic emulsion prepared in Preparation Example 6 and 7, respectively were used as the aqueous dispersion of polymer, and the same tests as in Example 1 were carried out. The results are shown in Table 2.

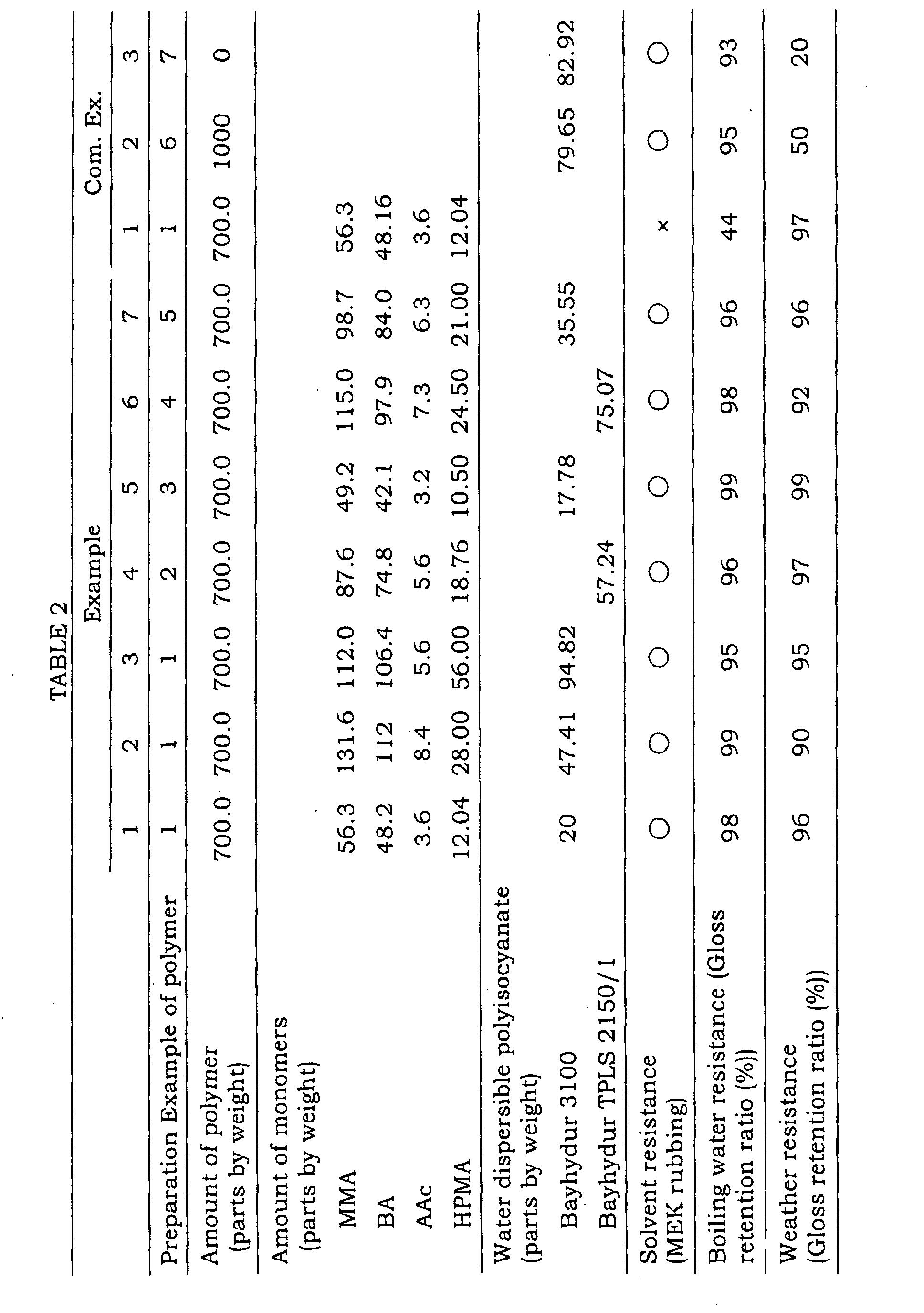

### INDUSTRIAL APPLICABILITY

The present invention can provide the aqueous coating composition of fluorine-containing copolymer being excellent in long-term weather resistance and useful for the interior and exterior of buildings and the aqueous dispersion composition of fluorine-containing copolymer which is used for the aqueous coating composition.

## Claims

1. An aqueous coating composition of fluorine-containing copolymer, wherein an aqueous dispersion of fluorine-containing copolymer having hydroxyl and a polyisocyanate compound dispersible in water are dispersed in water.

2. The aqueous coating composition of Claim 1, wherein a proportion of the aqueous dispersion of fluorine-containing copolymer having hydroxyl to the polyisocyanate compound dispersible in water is from 0.1 to 2.0 in the ratio of NCO/OH (mole ratio).

3. The aqueous coating composition of Claim 1 or 2, wherein the aqueous dispersion of fluorine-containing copolymer is obtained by emulsion-polymerizing from 10 to 400 parts by weight of a monomer mixture containing an alkyl acrylate having an alkyl group of C1 to C18 and/or an alkyl methacrylate having an alkyl group of C1 to C18 and an ethylenically unsaturated monomer copolymerizable with those esters in an aqueous medium in the presence of 100 parts by weight of fluorine-containing polymer particles to give copolymer particles having an average particle size of from 0.05 to 3 µm, in said monomer mixture, a monomer having hydroxyl being contained in an amount of from 0.1 to 50 % by weight based on said monomer mixture.

4. The aqueous coating composition of any of Claims 1 to 3, wherein said fluorine-containing copolymer is a vinylidene fluoride copolymer.

5. The aqueous coating composition of Claim 3 or 4, wherein said fluorine-containing polymer particles are particles of a vinylidene fluoride copolymer obtained by polymerizing a monomer mixture containing from 50 to 100 % by mole of vinylidene fluoride.

6. The aqueous coating composition of any of Claims 3 to 5, wherein said monomer having hydroxyl contains an alkylene chain which is directly bonded to hydroxyl and has 3 or more carbon atoms.

7. The aqueous coating composition of Claim 1, wherein said aqueous dispersion of fluorine-containing copolymer having hydroxyl is obtained by seed-polymerizing from 25 to 150 parts by weight of a monomer mixture containing an alkyl acrylate and/or an alkyl methacrylate and an ethylenically unsaturated monomer having hydroxyl in an aqueous dispersion containing fluorine-containing polymer particles in the presence of 100 parts by weight of the fluorine-containing polymer particles.

8. The aqueous coating composition of any of Claims 1 to 7, wherein the polyisocyanate compound dispersible in water is a compound having self-emulsifying property.

9. The aqueous coating composition of any of Claims 1 to 8, wherein the polyisocyanate compound contains polyoxyethylene chain.

10. The aqueous coating composition of any of Claims 1 to 9, wherein the polyisocyanate compound having self-emulsifying property is a polyisocyanate compound of a reaction product of polyisocyanate and a nonionic emulsifying agent which has active hydrogen atom reactive with isocyanate group and contains ethylene oxide units in an average amount of from 5 to 70 in one molecule.

11. The aqueous coating composition of any of Claims 1 to 10, wherein said nonionic emulsifying agent is a polyoxyalkylene monool.

12. An aqueous dispersion composition of fluorine-containing copolymer which is used for an aqueous coating composition, **characterized in that** the aqueous dispersion composition comprises an aqueous dispersion of fluorine-containing copolymer obtained by emulsion-polymerizing from 10 to 400 parts by weight of a monomer mixture containing an alkyl acrylate having an alkyl group of from C 1 to C18 and/or an alkyl methacrylate having an alkyl group of from C1 to C18 and an ethylenically unsaturated monomer copolymerizable with those esters in an aqueous medium in the presence of 100 parts by weight of fluorine-containing polymer particles to give copolymer particles having an average particle size of from 0.05 to 3 µm, in said monomer mixture, a monomer having hydroxyl being contained in an amount of from 0.1 to 50 % by weight based on said monomer mixture.

13. An aqueous coating composition of vinylidene fluoride copolymer, wherein an aqueous dispersion of particles of vinylidene fluoride copolymer having hydroxyl and obtained by seed-polymerizing an acrylic monomer in the presence of particles of vinylidene fluoride copolymer as seed particles and a polyisocyanate compound dispersible in water are dispersed in water and the vinylidene fluoride copolymer of the seed particles contains from 55 to 98 % by mole of vinylidene fluoride unit.

14. The aqueous coating composition of Claim 13, wherein the vinylidene fluoride copolymer of the seed particles is a copolymer comprising vinylidene fluoride and at least one selected from the group consisting of chlorotrifluoroethylene, tetrafluoroethylene and hexafluoropropylene.

15. The aqueous coating composition of Claim 13 or 14, wherein the seed-polymerized particles of the vinylidene fluoride copolymer having hydroxyl in the aqueous dispersion of vinylidene fluoride copolymer are vinylidene fluoride copolymer particles obtained by emulsion-polymerizing from 10 to 400 parts by weight of a monomer mixture containing an alkyl acrylate having an alkyl group of C1 to C18 and/or an alkyl methacrylate having an alkyl group of C1 to C18 and a hydroxyl-containing ethylenically unsaturated monomer copolymerizable with those esters in an aqueous medium in the presence of 100 parts by weight of vinylidene fluoride copolymer particles, in which said hydroxyl-containing ethylenic monomer is contained in an amount of from 0.1 to 50 % by weight in said monomer mixture and the obtained hydroxyl-containing vinylidene fluoride copolymer particles have an average particle size of from 0.05 to 3 µm.

16. The aqueous coating composition of any of Claims 13 to 15, wherein the polyisocyanate compound contains polyoxyethylene chain.
